# EUROPEAN PATENT APPLICATION

(11) **EP 4 737 287 A1**
(43) Date of publication of application: **06.05.2026**
(21) Application number: 24209534.7
(22) Date of filing: 29.10.2024
(51) Int. Cl.: B62K 5/025, B62K 7/04, B62K 25/04, B62M 6/60, B62K 5/00

(54) **CARGO BIKE**

(71) Applicant: Volvo Truck Corporation, 405 08 Göteborg (SE)
(72) Inventor: COURTENS, Fabrice, 69300 Caluire et cuire (FR)
(74) Representative: Germain Maureau

(57) **Abstract**

The invention relates to a cargo bike (1), with a longitudinal orientation (X), comprising:
- a steerable front wheel (4) located at a front section (2) of the cargo bike (1), a first rear wheel (8) and a second rear wheel (9) located at a rear section (3) of the cargo bike (1), a chassis (10) being configured to support loads (11) placed at the rear section (3),
- a first drive motor mechanically coupled to the first rear wheel (8) and built into the first rear wheel (8), and a second drive motor mechanically coupled to the second rear wheel (9) and built into the second rear wheel (9),
- at least one pedal (7), and an electric generator connected mechanically with said at least one pedal (7) and configured to generate power when said at least one pedal (7) is actuated,
- at least one electric assistance battery (12) for powering the first drive motor and the second drive motor,
- an electronic power unit for controlling the powering of the first drive motor and the second drive motor by the electric generator and by the at least one electric assistance battery, and
- a rear suspension system (13) comprising for each rear wheel (8, 9) a damping element and a cylinder for adjusting the height of a lateral part of the chassis (10), each cylinder being controlled by a control system to adjust the position of the chassis (10).

## Description

### TECHNICAL FIELD

The disclosure relates generally to the distribution of containers by a vehicle and, more particularly, by a cargo bike. In particular aspects, the disclosure relates to a three-wheeled electric cargo bike. Although the disclosure may be described with respect to a cargo bike, the disclosure is not restricted to any particular vehicle.

### BACKGROUND

The invention applies to distribution of articles ordered by users, in particular urban users living in a city. The articles are usually collected in a warehouse outside the city before being delivered by distribution vehicles from different companies to the user individually or via a retail outlet, such as a supermarket or shop.

For this purpose, delivery systems implementing containers such as a pick-up box with a plurality of compartments each configured to accommodate at least one of the articles are known. In particular, the container is prepared according to the orders of the users and temporary placed on a ground surface where the users may pick-up their article.

Last-mile delivery has developed rapidly in recent years. One of the main problems is congestion due to the number of light and heavy vehicles delivering goods, but the worst is the time spent unloading, usually in poor parking conditions, having to open the rear doors of a truck, deploy a tail lift and use a pallet truck.

Given the various constraints of urban delivery and the difficulties of recharging electric vehicles, the cargo bike seems to offer a sustainable solution for absorbing the growth in last-mile deliveries due in particular to the explosion in e-commerce. Cargo bikes are developing rapidly, especially electrically-assisted cargo bikes, first in cycle logistics start-ups specializing in urban deliveries, but also increasingly with traditional hauliers and vehicle rental companies.

Electrically-assisted cargo bike has a number of advantages. It emits no CO₂ or particulates, so it is not subject to access restrictions in city centers. Thanks to a range of equipment, including trunks and towbars, it can transport up to 300 kg of load, including temperature-controlled goods.

It is manoeuvrable enough to access any road, delivering to the nearest recipient even in streets or alleyways that are off-limits or inaccessible to trucks. The integrated, low-power electric motor helps the delivery to bear the weight of the device, but does not require long charging times for the batteries, which can even be recharged when pedaling or braking.

An important objective is to have a cargo bike that is light, easy to handle and less expensive.

### SUMMARY

According to a first aspect of the disclosure, a cargo bike, with a longitudinal orientation, comprises:
- a steerable front wheel located at a front section of the cargo bike, a first rear wheel and a second rear wheel located at a rear section of the cargo bike, a chassis being configured to support loads placed at the rear section,
- a first drive motor mechanically coupled to the first rear wheel and built into the first rear wheel, and a second drive motor mechanically coupled to the second rear wheel and built into the second rear wheel,
- at least one pedal, and an electric generator connected mechanically with said at least one pedal and configured to generate power when said at least one pedal is actuated,
- at least one electric assistance battery for powering the first drive motor and the second drive motor,
- an electronic power unit for controlling the powering of the first drive motor and the second drive motor by the electric generator and by the at least one electric assistance battery, the electronic being for instance electrically connected to the electric generator, the at least one electric assistance battery, the first drive motor and the second drive motor, and
- a rear suspension system comprising for each rear wheel a damping element and a cylinder for adjusting the height of a lateral part of the chassis, each cylinder being controlled by a control system to adjust the position of the chassis, in particular as a function of a predetermined position.

The first aspect of the disclosure may seek to provide a cargo bike which allows to eliminate the need for a mechanical link between the pedals and the rear wheels. Due to the management of the drive motors power supply by the electronic power unit, a chain or a belt is not required for coupling the pedals to the rear wheels, and the problem of the weight and of the twisting of such a chain or belt when the front part rotates is avoided. Moreover, the specific rear suspension system makes it possible to stabilize the cargo bike by adjusting the height and position of the chassis.

In some examples, each cylinder is controlled by a control system to maintain the position of the chassis in a predetermined equilibrium position, for instance to maintain a horizontal chassis position in all circumstances, so that the cargo bike remains permanently parallel to the road.

In some examples, for each rear wheel, a suspension arm links the wheel to the chassis.

In some examples, the damping element is mounted on the suspension arm and on the chassis.

In some examples, each rear wheel is integral with a wheel support which is rotatably mounted around a chassis support to which the suspension arm is fixed.

In some examples, the suspension arm is rotatably mounted around the chassis and is fixedly mounted on the chassis support.

In some examples, the cylinder is mounted to rotate both around the chassis support and the chassis.

In some examples, the cylinder comprises a cylinder tube in which moves a piston connected to the chassis support.

In some examples, the piston is rotatably mounted around the chassis support.

In some examples, the cylinder tube is rotatably mounted around the chassis.

In some examples, the electronic power unit is able to pre-charge a capacitor of each drive motor by said at least one electric assistance battery for a predetermined period.

In some examples, the electronic power unit includes a pre-charging system comprising a series circuit consisting of a switch and a resistor.

In some examples, the electronic power unit includes a charging system comprising a main switch.

In some examples, the main switch of the charging system is connected in parallel with the pre-charging system.

In some examples, the electronic power unit includes a control device able, during an initial period, to close the switch of the pre-charging system while opening the main switch, and, after the initial period, to close the main switch while opening the switch of the pre-charging system.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1** is a perspective view of a cargo bike of the invention according to one example,
**FIG. 2** is a first detailed view of an electric assistance battery of the cargo bike,
**FIG. 3** is a second detailed view of an electric assistance battery of the cargo bike,
**FIG. 4** is a block diagram illustrating the mode of operation of an electronic power unit of the cargo bike,
**FIG. 5** is a perspective view of a rear part of the cargo bike,
**FIG. 6** is a first detailed view of a suspension system of the cargo bike, and
**FIG. 7** is a second detailed view of a suspension system of the cargo bike.

### DETAILED DESCRIPTION

Aspects set forth below represent the necessary information to enable those skilled in the art to practice the disclosure.

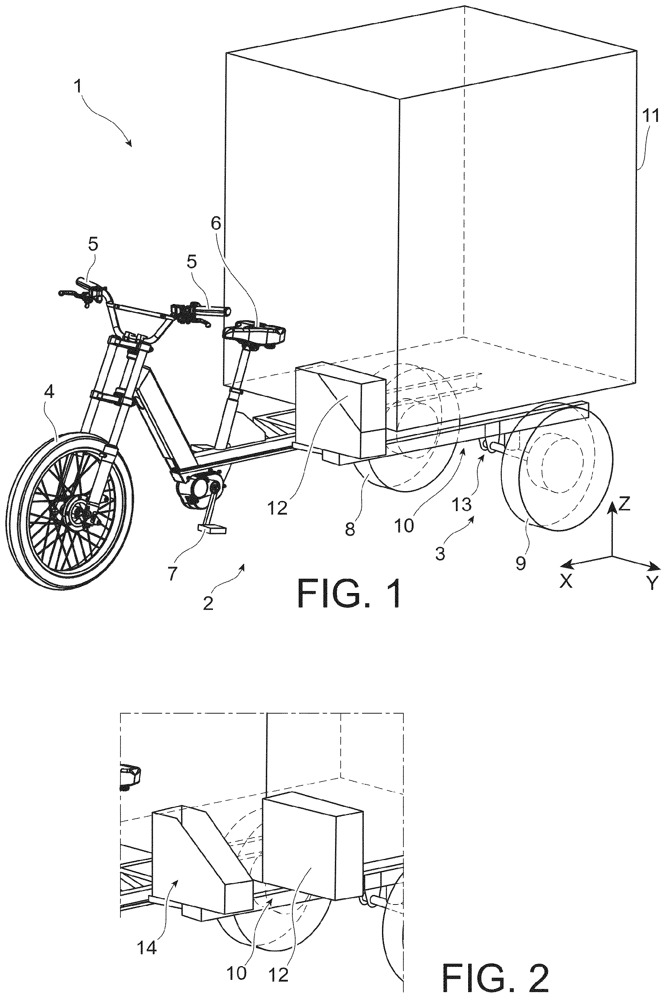

**FIG. 1** is a perspective view of a cargo bike of the invention according to one example.

The cargo bike 1 extends generally in a longitudinal direction X. The spatial representation of the cargo bike 1 is supplemented by a transverse direction Y and a vertical direction Z. The cargo bike 1 can be driven using muscle power and/or an electric drive.

The cargo bike 1 comprises a front section 2 and a rear section 3. The cargo bike 1 is typically a three-wheeler with one front wheel and two rear wheels.

The front section 2 comprises a steerable front wheel 4, handlebars 5 for steering the front wheel 4, and a seat 6. In use, the rider sits in the seat 6 and steers the cargo bike 1 using the handlebars 5. The front section 2 also comprises pedals 7.

The rear section 3 comprises a first rear wheel 8, a second rear wheel 9, and a loading area between the first and second rear wheels 8, 9. The loading area includes a container 11. Although not limited thereto, such container 11 for carrying articles finds application for delivering articles ordered by different users of a same geographical area, such as a town or a neighborhood of a city. The container 11 is typically a pick-up box. The container 11 may be in the form of a box with a generally parallelepiped shape.

The rear section 3 further comprises a first drive motor for driving the first rear wheel 8 and a second motor for driving the second rear wheel 9, as well as a rear suspension system 13 and at least one electric assistance battery 12 for powering the first drive motor and the second drive motor. A frame 10 supports the driver area and the loading area.

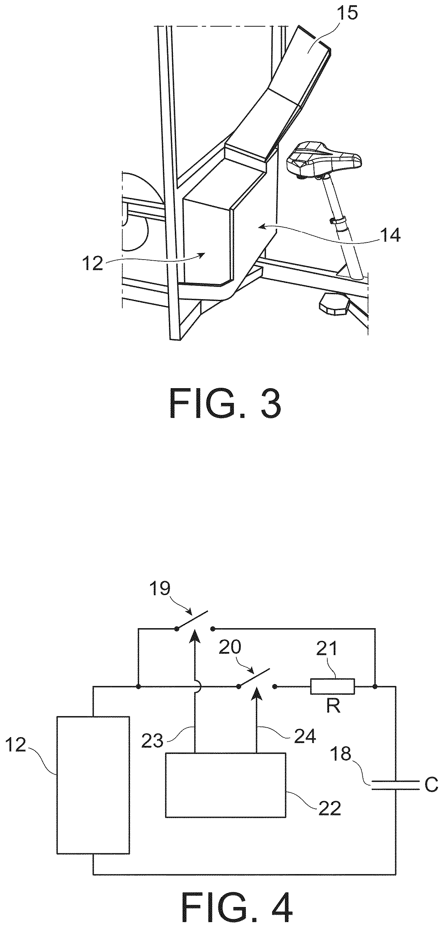

**FIG. 2** is a first detailed view of the electric assistance battery 12, whereas FIG. 3 is a second detailed view of the electric assistance battery 12.

The batteries 12 are advantageously swappable batteries. On the urban version of the cargo bike, there may be one battery (1.5 kW), while on the heavy cargo bike there may be two batteries (twice 1.5 kW). The batteries 12 can be recharged directly on the cargo bike and are placed in housings 14. The housings 14 can be fitted with a hinged cover 15 and a locking system.

Further stability when cornering is provided by the separate motors in the first and second rear wheels 8, 9, which allows the rear wheels 8, 9 to be driven at different speeds, thus compensating for the difference in distance travelled by each rear wheel 8, 9 on a curve. By providing the drive motors in the rear part 3 of the cargo bike 1, a chain or a belt is not required for coupling the pedals 7 to the rear wheels, and the problem of such a chain or belt being twisted on rotation of the front part 2 is avoided.

The drive motors can be of any suitable type. Preferably the drive motors are built into the rear wheels 8, 9, as this allows more space for the loading area between the rear wheels 8, 9. The drive motors are preferably brushless direct drive motors. The number of poles and the diameter of the motor can be chosen to obtain a required power and maximum speed.

The cargo bike 1 includes a generator which is coupled to the pedals 7. The generator is configured to generate power when the pedals are actuated. The generator is connected to at least one of the first drive motor and the second drive motor by an electric transmission, via an electronic power unit (also called electronic power box). The electronic power unit is able to control a flow of electric energy between the generator, the at least one electric assistance battery 12 and the first drive motor and the second drive motor.

The generator may be connected to a battery 12 and the battery 12 may be connected to at least one of the first drive motor and the second drive motor. Thus the generated power can be transferred to the battery 12 for supplying power to one or more of the rear wheel motors. The generator may alternatively be directly connected to at least one of the first drive motor and the second drive motor. The generator may alternatively be directly connected to both the battery 12 and at least one of the first drive motor and the second drive motor.

The electronic power unit cover several functions. It supplies electrical power to the first drive motor and the second drive motor (for example a 48V power supply). It acts as a converter (for example a 48V/12V DC/DC converter) to power accessories of the cargo bike, such as flashing lights. It protects the first drive motor and the second drive motor by pre-charging batteries to avoid capacitor inrush currents and by using fuses to protect them from excessively high currents.

The electronic power unit manages the scheduling of power-up operations. After power-up, the electric assistance batteries are used for a predetermined period, for example one second, charging pre-charging resistors of the electronic power unit, so that the motors receive less electric current during the predetermined period. At the end of the predetermined period, the pre-charging resistors are no longer used and the first drive motor and the second drive motor are powered normally by the batteries, at nominal battery voltage (for example 48V). If an external charger is connected to an electric assistance battery, the electronic power unit advantageously orders the isolation of the first drive motor and the second drive motor from the batteries. The electronic power unit also balances the batteries via a CAN link. This allows the batteries to balance the electrical power consumed by the motors.

The electronic power unit advantageously uses a self-holding mechanism to power up the vehicle by pressing and holding a button. Moreover, the electronic power unit can be disconnected at any time using an emergency stop button.

**FIG. 4** is a block diagram illustrating the mode of operation of the electronic power unit.

It is shown diagrammatically one example of a charging system for a capacitor of a drive motor by means of an electric assistance battery which includes a pre-charging system. An electric assistance battery 12 is used to charge a capacitor 18 with electrical energy. Charging can be performed either via a pre-charging system or via an actual charging system in other words via a main switch 19; in practice, firstly, in an initial period, this is done via the pre-charging system and then, over a second period, via the actual charging system itself.

The pre-charging system comprises a series circuit consisting of a switch 20 and a resistor 21, as well as that portion of a control system 22 for the switches which is responsible for opening and closing switch 20. The pre-charging system is located between the positive pole of battery 12 and one of the terminals of capacitor 18. Downstream of capacitor 18, a drive motor is located which, for reasons of simplicity is not shown in the diagram, which will consume the energy stored in capacitor 18.

The charging system comprises a main switch 19 as well as that portion of the control device 22 for the switches responsible for opening and closing main switch 19, as well as the pre-charging system. The charging system is located between the positive pole of battery 12 and the same terminal of capacitor 18 as the pre-charging system. The main switch 19 of the charging system is connected in parallel with the pre-charging system. Control system 22 has several interface connections, 23 and 24. Interface connection 23 controls the main switch 19. Interface connection 24 controls switch 20.

During an initial period, switch 20 is closed while main switch 19 is open. Pre-charging of capacitor 18 by battery 12 via resistor 21 is performed up until the voltage across capacitor 18 is close to that across the terminals of battery 12. Pre-charging time is for a period of about 5τ with rate τ equal to RC, R being the value of the resistor 21 and C the value of the capacitor 18. In a second period, main switch 19 is closed while switch 20 is open. Charging of capacitor 18 is maintained directly by battery 12.

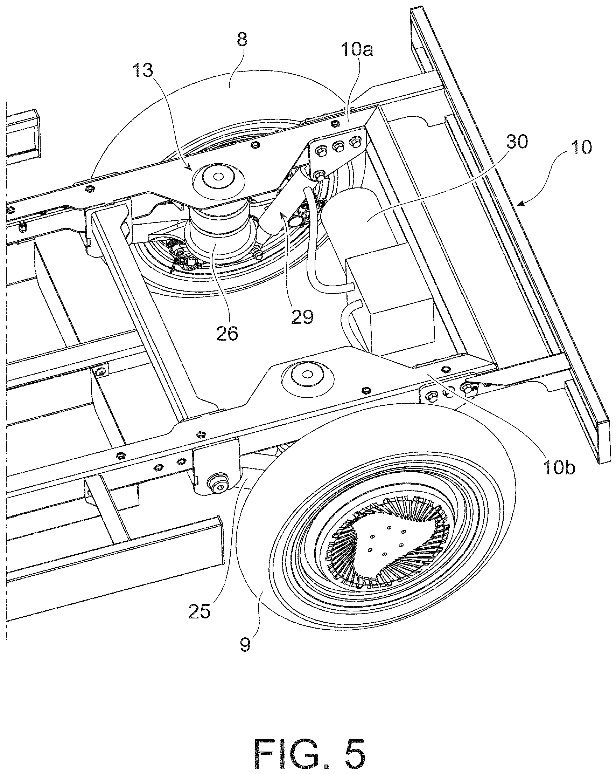

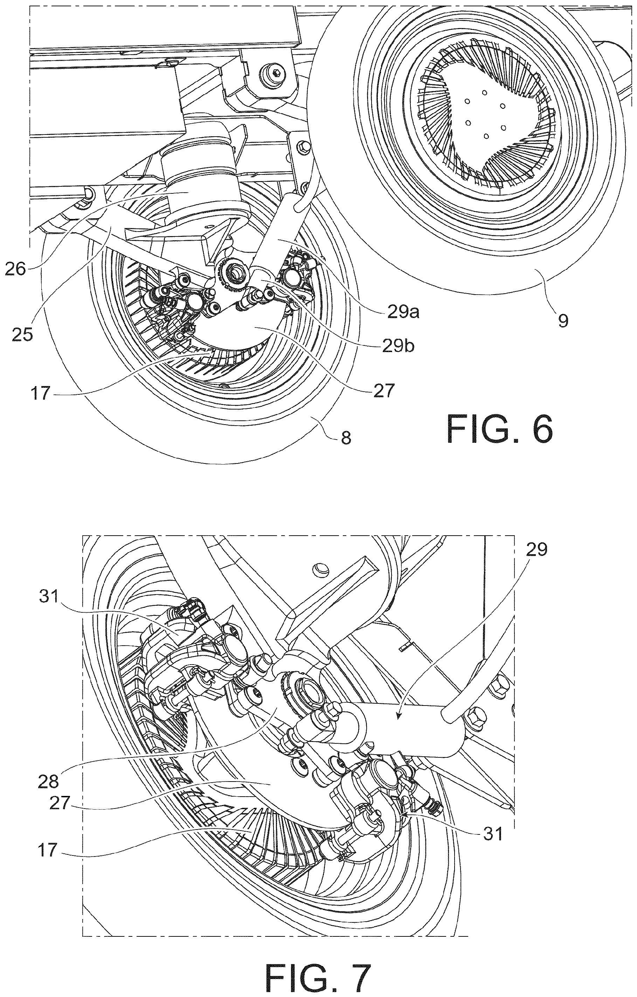

**FIG. 5** is a perspective view of a rear part of the cargo bike, whereas **FIG. 6** is a first detailed view of a suspension system of the cargo bike, and **FIG. 7** is a second detailed view of a suspension system of the cargo bike

The rear suspension system 13 will now be described.

At each rear wheel 8, 9, a suspension arm 25 links the wheel 8, 9 to the chassis 10. The suspension arm 25 rotates around the chassis 10. A damping element 26, such as a coil spring, is mounted on the suspension arm 25 and on the chassis 10.

A drive motor 17 is mounted on the wheel 8, 9. The wheel 8, 9 is integral with a wheel support 27 which is rotatably mounted around a chassis support 28 to which the suspension arm 25 is fixed. A cylinder 29 is mounted to rotate both around the chassis support 28 and the chassis 10. Each cylinder 29 comprises a cylinder tube 29a in which moves a piston 29b connected to the chassis support 28. A hydraulic pump 30 is connected to each hydraulic cylinder 29. Each cylinder 29 is operated by a control system so as to adjust the height of a lateral part 10a, 10b of the chassis 10. A first lateral part 10a of the chassis 10, for example one part on the right, is associated with a first rear wheel 8, while a second lateral part 10b of the chassis 10, for example one part on the left, is associated with a second rear wheel 9.

Thus, it is possible to adjust the height and the position of the chassis 10. The control system makes it possible to maintain a horizontal chassis position in all circumstances, especially when cornering, so that the cargo bike remains permanently parallel to the road.

The hydraulic suspension described here could just as easily be an electric or pneumatic suspension.

One or more brakes 31, including for example a handbrake, are provided to stop the rear wheels 8, 9 of the cargo bike 1. The brakes can be fitted with a brake caliper.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A cargo bike (1), with a longitudinal orientation (X), comprising:
- a steerable front wheel (4) located at a front section (2) of the cargo bike (1), a first rear wheel (8) and a second rear wheel (9) located at a rear section (3) of the cargo bike (1), a chassis (10) being configured to support loads (11) placed at the rear section (3),
- a first drive motor (17) mechanically coupled to the first rear wheel (8) and built into the first rear wheel (8), and a second drive motor (17) mechanically coupled to the second rear wheel (9) and built into the second rear wheel (9),
- at least one pedal (7), and an electric generator connected mechanically with said at least one pedal (7) and configured to generate power when said at least one pedal (7) is actuated,
- at least one electric assistance battery (12) for powering the first drive motor (17) and the second drive motor (17),
- an electronic power unit for controlling the powering of the first drive motor (17) and the second drive motor (17) by the electric generator and by the at least one electric assistance battery (12), and
- a rear suspension system (13) comprising for each rear wheel (8, 9) a damping element (26) and a cylinder (29) for adjusting the height of a lateral part (10a, 10b) of the chassis (10), each cylinder (29) being controlled by a control system to adjust the position of the chassis (10) as a function of a predetermined position.

2. The cargo bike (1) of claim 1, wherein each cylinder (29) is controlled by a control system to maintain the position of the chassis (10) in a predetermined equilibrium position.

3. The cargo bike (1) of claim 1 or 2, wherein for each rear wheel (8, 9) a suspension arm (25) links the wheel (8, 9) to the chassis (10).

4. The cargo bike (1) of claim 3, wherein the damping element (26) is mounted on the suspension arm (25) and on the chassis (10).

5. The cargo bike (1) of claim 3 or 4, wherein each rear wheel (8, 9) is integral with a wheel support (27) which is rotatably mounted around a chassis support (28) to which the suspension arm (25) is fixed.

6. The cargo bike (1) of claim 5, wherein the suspension arm (25) is rotatably mounted around the chassis (10) and is fixedly mounted on the chassis support (28).

7. The cargo bike (1) of claim 5 or 6, wherein the cylinder (29) is mounted to rotate both around the chassis support (28) and the chassis (10).

8. The cargo bike (1) of claim 7, wherein the cylinder (29) comprises a cylinder tube (29a) in which moves a piston (29b) connected to the chassis support (28).

9. The cargo bike (1) of claim 8, wherein the piston (29b) is rotatably mounted around the chassis support (28).

10. The cargo bike (1) of claim 8 or 9, wherein the cylinder tube (29) is rotatably mounted around the chassis (10).

11. The cargo bike (1) of any claims 1-10, wherein the electronic power unit is able to pre-charge a capacitor (18) of each drive motor (17) by said at least one electric assistance battery (12) for a predetermined period.

12. The cargo bike (1) of claim 11, wherein the electronic power unit includes a pre-charging system (20, 21) comprising a series circuit consisting of a switch (20) and a resistor (21).

13. The cargo bike (1) of claim 12, wherein the electronic power unit includes a charging system comprising a main switch (19).

14. The cargo bike (1) of claim 13, wherein the main switch (19) of the charging system is connected in parallel with the pre-charging system (20, 21).

15. The cargo bike (1) of claim 14, wherein the electronic power unit includes a control device able, during an initial period, to close the switch (20) of the pre-charging system (20, 21) while opening the main switch (19), and, after the initial period, to close the main switch (19) while opening the switch (20) of the pre-charging system (20, 21).
